# EUROPEAN PATENT SPECIFICATION

(11) **EP 1 161 643 B1**
(45) Date of publication and mention of the grant of the patent: **14.07.2004**
(21) Application number: 99962583.3
(22) Date of filing: 20.12.1999
(51) Int. Cl.: F24D 3/14, E04F 15/02

(54) **SOUND-INSULATING, PREFERABLY FLOATING FLOOR WITH HEATING ELEMENTS**
SCHALLDÄMMENDER, VORZUGSWEISE SCHWIMMENDER, BODEN MIT HEIZELEMENTEN
PARQUET FLOTTANT DE PREFERENCE A ISOLATION ACOUSTIQUE DOTE D'ELEMENTS CHAUFFANTS

(30) Priority: 21.12.1998 NO 986019
(43) Date of publication of application: 12.12.2001
(73) Proprietor: Hunton Fiber AS, 1338 Sandvika (NO)
(72) Inventor: CHARLESEN, Tor, H., N-3290 Stavern (NO)
(74) Representative: Onn, Thorsten
(86) International application number: PCT/NO1999/000395
(87) International publication number: WO 2000/037857

(56) References cited:
- SE-B- 468 057
- SE-C2- 500 974
- US-A- 4 796 402

## Description

The present invention relates to a sound insulating, preferably floating floor, comprising a plurality of superimposed sheets of homogeneous, binder-free, highly refined wood pulp or other fibrous material, having a heating system comprising water pipes laid in grooves in elongate elements of a metal in sheet form, which grooves are in turn laid in grooves in the sheets. This type of floor is known from SE-B-468057.

More specifically, the invention relates to a preferably floating floor having sound insulating properties which satisfies public authority requirements with respect to sound insulation in storey partitions and wherein at the same time there is incorporated an economical heating system based on the distribution of heat from warm water.

Warm water floor heating systems are so-called low-temperature floor heating systems. Such systems are becoming increasingly more common in homes in Norway and can in principle be compared with a traditional central heating system, but where the radiators are incorporated into the floor instead of being placed on a wall.

Thus, by laying the pipes out over the total floor surface, the whole floor will act as a "radiator". Since the average temperature of the water which is caused to circulate in this water-fed floor heating system is below 300C, the term'low-temperature floor heating system" is used.

If such water-fed floor heating systems are to be able to utilise low water temperatures and at the same time be energy-efficient, a number of criteria should be met:
- the heat loss must be low, which will result in the heat requirement being low;
- it should be used on large heating surfaces;
- it should be possible to have efficient, individual heat control;
- the material layer in the floor surface should have low thermal diffusivity (i.e., low thermal conductivity and heat capacity);
- the thermal resistance of the materials lying on top of the heating pipes must be low;
- the temperature distribution across the heating surfaces must be good; and - the heating pipes must have good, conductive contact with a good heat-conducting material.

In order to arrive at the inventive floor which, in addition to the warm water heating system, must also satisfy public authority requirements with respect to noise insulation in storey partitions, tests have been carried out in which such water-fed heating systems have been combined with different types of sound-insulating materials. Surprisingly, it has been found that with the inventive floor not only are the required sound insulation and the desired heating effect obtained, but that, in fact, an improved sound insulation is obtained due to the manner in which there two systems work together.

The above mentioned document SE-468057 is not directed to obtaining a good sound-insulation. Therein it is mentioned that between the top sheet and the wood fibre sheet a thin sheet of an insulating material. In this case the object is heat insulation as the material is defined as cellular plastic.

The floor according to the present invention is characterized in that below the sheets having the heating system there is provided at least one sheet having unbroken top surfaces.

In a preferred embodiment, the heating system comprises water pipes, laid in loops and circuits that are known per se, wherein the water piping is laid in grooves in elongate elements of a metal in sheet form, which grooves in turn are laid in grooves in the sound-insulating sheets.

In a further preferred embodiment, the floor is characterised in that the elongate elements with grooves are made of aluminum, optionally return aluminum.

Correct sizing will enable good contact to be obtained between the water piping and the groove in the elongate metal element, and this will result in good distribution of the heat.

As mentioned above, an improved sound-insulating effect has been observed when using such elongate metal elements in addition to the purely sound-insulating wood fibre sheets, which may be attributable to the fact that an additional material gives "sound penetration and sound passage conditions" which result in a reduction in the overall transmission of sound in the storey partition.

The invention will be illustrated in more detail with reference to the attached figures, wherein:

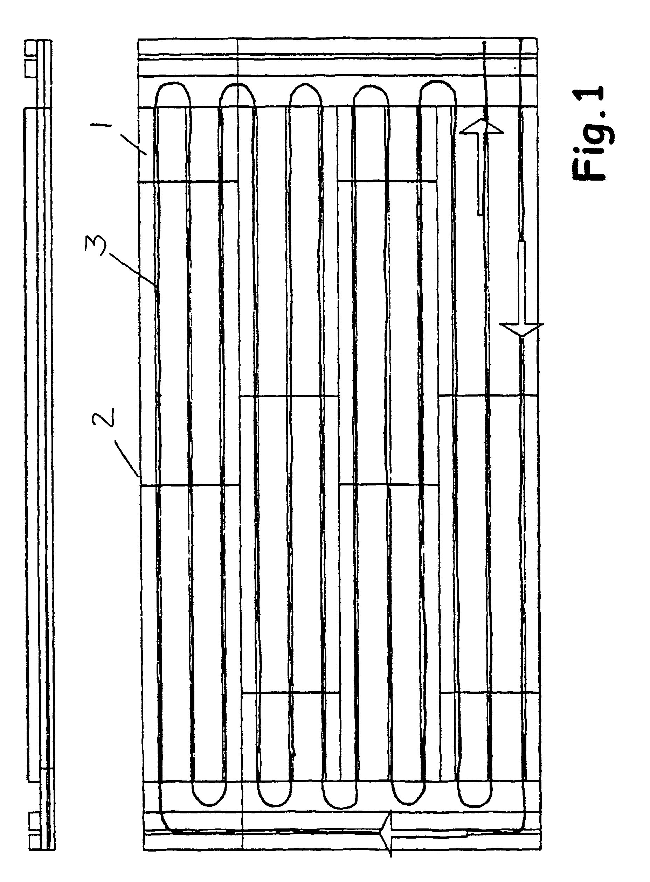

Figure 1 shows a conventional pattern per se for the laying of a warm water cable; Figure 2 shows the use of heat distribution sheets in the form of elongate metal elements; and
Fig 3 shows the laying of such heat distribution plates that have water pipes laid therein, and which are in turn placed in grooves in the sound-insulating material.

The sound-insulating part of a storey partition is built up of three wood fibre sheets 1, without being limited to that number.

On this floor a network of water pipes or tubes 3 having inflow 3' and outflow" are laid in a pattern that is known per se.

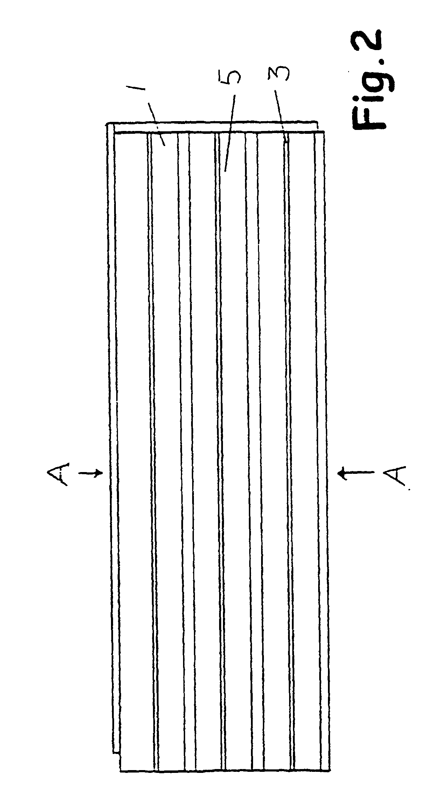

In Figure 2 it is indicated how the water piping 3 is incorporated into the elongate heat distribution elements 5.

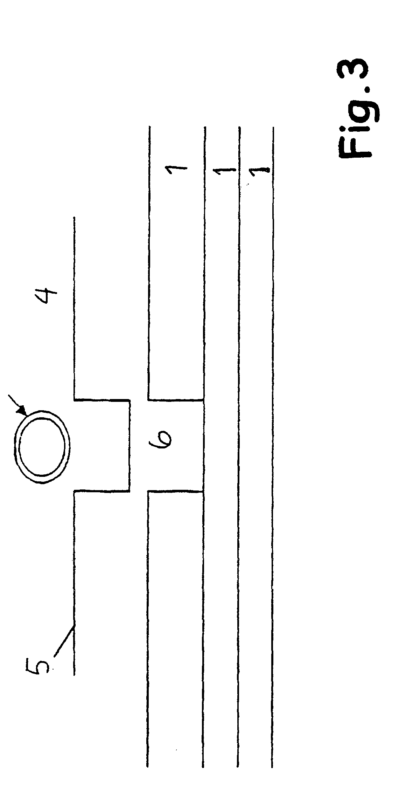

Figure 3 is a cross-section through the system where three sheets 1 have been laid one on top of the other.

In the top sheet of the top layer of sheets 1 grooves 6 are made, designed for receiving the grooves 4 in the heat distribution sheets 5.

The water piping 3 is then in turn placed in the grooves 4.

As regards the material in the heat distribution sheets 5, aluminium has been found to be advantageous, both from an economical and technical point of view.

In a preferred embodiment, return aluminium is used. This gives a somewhat poorer, technical result, although it is nevertheless more than satisfactory per se, but at the same time a considerable financial saving is achieved, which far outweighs the somewhat poorer technical quality.

It was mentioned above that tests using a combination of warm water heating of a floor and sound insulation of the floor, in a combination as described above, resulted in sound-insulating properties beyond what was to be expected when using wood fibre sheets only.

This is probably due to the fact that the horizontal "wings" on the heat distribution sheets, because of the inhibited passage of sound, act as "reflectors" and thus further reduce the sound penetration and so increase the sound insulation.

It has been mentioned above that homogeneous, binder-free sheets of highly refined wood pulp are used.

This is an environmentally friendly and anti-allergenic material which at the same time is relatively inexpensive to produce.

Thus, the inventive combination, both as regards the sound-insulating part and the heat supply part, provides an environmentally friendly, inexpensive means of using both alternative heat sources and also to a great extent return materials, in that the work is carried out without undesirable additives and at the same time the technical requirements with respect to building construction are met.

## Claims

1. A sound insulating, preferably floating floor, comprising a plurality of superimposed sheets (1) of homogeneous, binder-free, highly refined wood pulp or other fibrous material, having a heating system (2) comprising water pipes (3) laid in grooves (4) in elongate elements (5) of a metal in sheet form, which grooves (4) are in turn laid in grooves (6) in the sheets (1), **characterized in that** below the sheets (1) having the heating elements at least one sheet having unbroken top surfaces is provided.

2. The floor according to claim 1, **characterized in that** the heating system (2) comprises water pipes (3), placed in loops and circuits that are known per se, wherein the water piping (3) is laid in grooves (4) in elongate elements (5) of a metal in sheet form, which grooves (4) are in turn laid in grooves (6) in the sheets (1).

3. The floor according to claims 1 and 2, **characterized in that** the elongate elements (5) with grooves (4) are made of aluminum, optionally return aluminum.

## Patentansprüche

1. Schallisolierender, vorzugsweise schwimmender Boden mit einer Anzahl übereinanderliegender Blätter (1) aus homogener, bindemittelfreier, hoch raffinierter Holzpulpe oder einem anderen faserigen Material, ausgestattet mit einem Heizsystem (2) mit Wasserrohren (3), welche in Nuten (4) in länglichen Elementen (5) eines blattförmigen Metalls liegen, wobei die Nuten (4) ihrerseits in Nuten (6) in den Blättern liegen, **dadurch gekennzeichnet, dass** unter den Blättern (1) mit den Heizelementen mindestens ein Blatt mit durchgehender Oberfläche vorhanden ist.

2. Boden nach Anspruch 1, **dadurch gekennzeichnet, dass** das Heizsystem (2) Wasserrohre (3) aufweist, welche in an sich bekannten Schleifen und Kreisläufen angeordnet sind, wobei die Wasserrohre (3) in Nuten (4) in länglichen Elementen (5) eines blattförmigen Metalls liegen, welche Nuten (4) ihrerseits in Nuten (6) in den Blättern (1) liegen.

3. Boden nach den Ansprüchen 1 und 2, **dadurch gekennzeichnet, dass** die länglichen Elemente (5) mit Nuten (4) aus Aluminium hergestellt sind, wahlweise aus Rücklauf-Aluminium.

## Revendications

1. Plancher à isolation acoustique, préférablement flottant, comprenant une pluralité de feuilles (1) en pulpe de bois homogène, exempte de liants et hautement raffinée, ou en un autre matériau fibreux, équipé d'un système de chauffage (2) comprenant des tuyaux d'eau (3) posés dans des rainures (4) dans des éléments allongés (5) d'un métal sous forme de feuille, lesquelles rainures (4) sont à leur tour posées dans des rainures (6) dans lesdites feuilles (1), **caractérisé en ce que** sous les feuilles (1) avec les éléments de chauffage, est prévue au moins une feuille à surface supérieure continue.

2. Plancher selon la revendication 1, **caractérisé en ce que** le système de chauffage (2) comprend des tuyaux d'eau (3) arrangés en boucles et circuits connus en soi, la tuyauterie (3) étant posée dans des rainures (4) dans des éléments (5) allongés d'un métal sous forme de feuille, lesquelles rainures (4) sont à leur tour posées dans des rainures (6) dans les feuilles (1).

3. Plancher selon les revendications 1 et 2, **caractérisé en ce que** les éléments allongés (5) munis de rainures (4) sont en aluminium, au choix en aluminium recyclé.
